# EUROPEAN PATENT SPECIFICATION

(11) **EP 1 240 747 B1**
(45) Date of publication and mention of the grant of the patent: **01.08.2007**
(21) Application number: 00987896.8
(22) Date of filing: 12.12.2000
(51) Int. Cl.: H04L 12/16, G06F 17/30

(54) **PROCEDURE AND SYSTEM FOR CONTROL OF SERVICES IN A DATA COMMUNICATION NETWORK**
VERFAHREN UND SYSTEM ZUR DIENSTESTEUERUNG IN EINEM DATENKOMMUNIKATIONSNETZ
PROCEDE ET SYSTEME DE COMMANDE DE SERVICES DANS DES RESEAUX DE COMMUNICATION DE DONNEES

(30) Priority: 13.12.1999 SE 9904540
(43) Date of publication of application: 18.09.2002
(73) Proprietor: TELIA AB, 123 86 Farsta (SE)
(72) Inventor: ISAKSSON, Anders, S-977 53 Lulea (SE); OLOFSSON, Sven-Rune, S-961 93 Lulea (SE); LEPPÄJÄRVI, Ann-Catrin, S-976 33 Lulea (SE); KLITTBY, Nils-Ake, S-976 32 Lulea (SE); KALLA, Thomas, S-972 42 Lulea (SE); BENGTSSON, Johan, S-976 32 Lulea (SE)
(74) Representative: Hopfgarten, Nils
(86) International application number: PCT/SE2000/002519
(87) International publication number: WO 2001/043361

(56) References cited:
- WO-A1-98/47295
- WO-A1-99/04582
- 'Telia mobile launches the world's first location-sensitive WAP-portal', [Online] 10 October 1999, XP002951460 Retrieved from the Internet: <URL:http://han16ns.telia.se/telia/thk/ thkpre70. nsf/vNyhetEfocusEng/5977885C93CF869B7125680 6003d9E> [retrieved on 2000-08-10]
- 'Telia, oracle and nokia in the world's first public WAP test', [Online] 16 September 1999, XP002951461 Retrieved from the Internet: <URL:http://www.wapforum.org/new/091699_tel ia.htm> [retrieved on 2000-08-10]
- N. FUJINO ET AL.: 'Mobile information service based on multi-agent architecture' IEICE TRANSACTIONS ON COMMUNICATION vol. E80-B, no. 10, October 1997, pages 1401 - 1406, XP000734533

## Description

### TECHNICAL FIELD

The present invention relates to a procedure and a system for control of provision of services to users of terminals connected to data communication networks.

### BACKGROUND

In the future it will be possible for a lot of people to, by means of their personal computers and different types of portable terminals, set up connections to a local broadband network, for instance a city network.

WO 99 04582 discloses an Internet based system for offering position dependent services on a mobile station for a digital cellular communication network. The station receives broadcast information transmitted from at least one base station subsystem. A location data filter is adapted to select location specific data from the received broadcast information, and a mobile device interface is adapted to establish a connection to the mobile device being connected to the mobile station and to transfer the location dependent data to the mobile device.

In WO 98 47295 selection of information sources is described, from which information is provided to users via a telecommunication system. The location of a user is then tracked in the system. Location data are accessed indicating localities in which information from the respective sources are deemed to be relevant. A list of information sources for the user is generated on the basis of tracking information and location data and is transmitted to the user so as to allow the user to select an information source of interest and to access information from the source.

The users frequently get into contact with resources in such networks as mentioned above via so called portals. Portals can be regarded as user interfaces which show and refer to different services in servers which are on local networks and other, larger networks, and which can be used by the persons who have Internet subscriptions at an Internet operator.

Today it is a problem to automatically adapt and add services in en existing portal for the geographical location where a user is. At set up of connection in another city/local network than the one that is normally used, for instance from the home, there today do not exist any mechanisms to automatically offer the same broadband services from the at the moment closest located local server, as those from the home server in the home network.

### DESCRIPTION OF THE INVENTION

One aim of the present invention is to solve the above indicated problem. This is achieved according to a method as claimed in claim 1, and a system as claimed in claim 10.

A broadband local network in each community/city and a network with nation-wide coverage is utilized. The portal has a so called "roaming function" which identifies the place where the user is and loads home local information adapted to the user's profile of interest. This means that when login is made in another locality than where the home server is located, the portal is adapted to the local network which at the moment is of interest.
Information specific for the locality then automatically turns up in the portal from a local server. This means, for instance, that a virtual "video shop" which is located on a server at the locality where login last was made, is exchanged for a video shop which is located on the local network where the new login has been made. The user can in the example then benefit in full from being connected on a broadband local network. In the same way all specific local information is updated in the portal. It means a great advantage to the user if he/she has a portal which in this way is upgraded automatically with information related to the locality.
To the user this means that as long as he/she utilizes material which is on the broadband local network, irrespective of where he/she is, the waiting time and the delays which otherwise are innumerable at "surfing" on the Internet are avoided. The user still has access to the home network and his/her home server.
In those cases where the terminal is of mobile type, the base stations shall, at handover of terminals, also check if the terminal is moving from a local network to another. If that is the case, the portal shall, in the same way as for a stationary terminal, be modified and adapted to the new local network.

The added value of having a "roaming" portal and a thorough service offer on the local network servers result in, as a consequence, that for instance network providers have greater possibility to establish connections with and keep customers, content providers and other Internet participants.

### BRIEF DESCRIPTION OF THE FIGURES

Figure 1 shows a schematic illustration of a system according to the present invention.
Figure 2 shows schematically an illustration of a service portal.
Figure 3 shows schematically an illustration of a change of a service portal at roaming.

### PREFERRED EMBODIMENTS

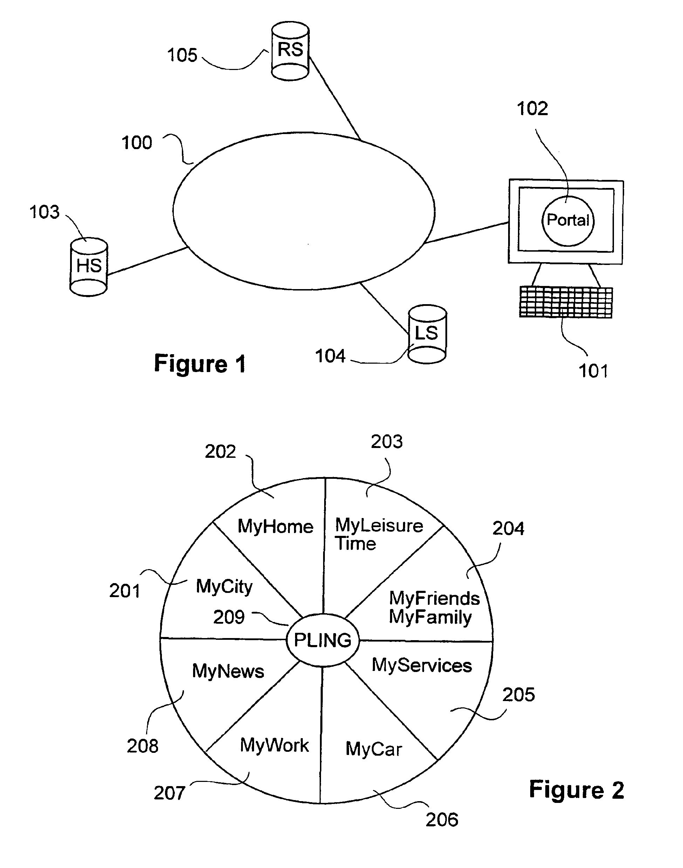

A system in which the present invention with advantage is implemented is shown in Figure 1. To a network 100 is connected a number of units of which only four are shown. It is well within the knowledge of the expert that a network of this type can include generally speaking an unlimited number of units. The units communicate, for instance, by means of known and standardized technology according to the IP-protocol.
To the network 100 is connected a user terminal 101 on the screen of which is illustrated in a very schematic way a portal 102. The showing of the portal 102 is preferably made by means of known software technique as, for instance, WebCrawler. Further, a number of servers are connected: A home server 103, a local server 104 and a roaming server 105, which all include functions that will be discussed in more details below.

### The Portal

The portal 102 is a user interface towards the servers which are on the network 100, and which can be used by the users who, for instance, holds Internet subscriptions at Internet providers.

The portal, in the following called MyLocalPortal, and which is shown schematically in Figure 2, might look like and function according to the following:

MyLocalPortal consists of a number of optional services as, for instance, MyCity 201, MyHome 202, MyLeisureTime 203, MyFriends/MyFamily 204, MyCar 206, MyWork 207, which are strongly focused on a certain field. Besides there are services as well which can supplement the others, for instance MyServices 205 and MyNews 208 connected to respective focus field. PLING 209 illustrates a notification about an event the user is to watch.

An adaptation to the information profile, the personal portal profile, which the user has selected is also made, he/she can for instance have selected to filter away all sport information, that he/she only wants 8 "pie chart pieces" in the portal, that the "Pling" shall only twinkle and not sound, etc.

### Roaming

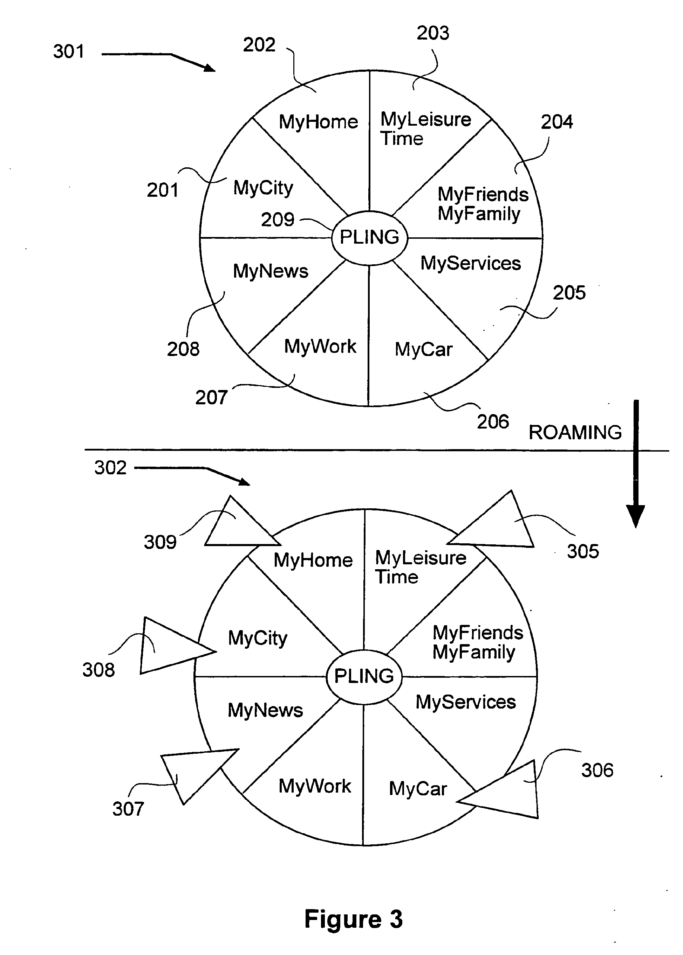

Roaming is illustrated in Figure 3. Roaming causes that the portal 102 adapts to and is updated with information for the local network or the place/locality where login has been made, however with regard to what the user has determined in his/her personal portal profile. The adaptation is also based on the quality of the connection of the terminal to the network 100.

This means that certain services in the portal will be added/removed, others are changed regarding the content. This means that, irrespective of where the customer connects, he/she will automatically have access to the broadband services which are there, for instance video and music. In addition he/she will have local information about current locality or city without need to search. The services which are of more personal kind are of course included as they are, for instance such services as calendar and address book.

Figure 3 illustrates schematically that the updating is made only for the relevant parts of the portal. MyCity 201 is replaced by MyCity-information 308 of the new place, and in the same way for the services MyHome 202, 309, MyLeisureTime 203, 305, MyCar 206, 306 and MyNews 208, 307.

The updating of the portal will be rapid because no big amount of data is transmitted to the terminal application when the portal is updated, but only web links, network references and meta information about the information content of the local server. This in its turn results in that the terminal application itself can filter away, in addition to what the personal portal profile already has filtered, links which it cannot handle, for instance video flows with too large bandwidth or, in the case WAP, only the WAP-adapted services that are to be derived, are shown.

The selection of which server that shall be appointed to be local server 104 is made in a roaming server 105 on basis of IP-number, mobile base station identity or calling subscriber number. The roaming server 105 uses databases which map said identities for terminals, home servers 103, local servers 104, OLL-boxes, GSM/UMTS base stations, etc. to geographical position.

The terminal application also can, if it has connection to any other positioning system, for instance GPS, GSM-positioning, user-input position etc, transfer this to the roaming server.

### The case user - stationary terminal

The scenario is that a user wants to get access to his/her portal from a stationary terminal 101 in, for instance, a library, in a provision-shop or at a place of work. The user clicks on an icon/button, MyPortal. An HTTP-call is directed to a central roaming server 105 in the network after approved authentication, for instance via traditional input of user name and password, or use of a new technique such as smart card, fingerprints etc. The roaming server 105 gives an HTTP-response to the application with references to the local server 104 and the home server 103.

The mapping towards which server that shall be appointed to be local server 104 is made in the roaming server 105, on basis of the IP-number of the stationary terminal 101. In the database of the roaming server, there are IP-numbers for clients, home servers and local servers related to geographical position.

The portal application then derives both the user's locality profile for the home locality and personal portal profile from the home server. From the local server is derived the for the current locality specific locality profile (unfiltered with regard to personal portal profile). The application then compares the two locality profiles and filters the content on basis of the personal portal profile. The user portal is presented, finally, updated with the services and the offer which is on the local server 104 on the locality where the user is.
If the roaming server 105 does not succeed in locating via the IP-number database, the application in a dialog square asks the user to indicate where he/she is at present. In a roaming database this information is stored in order to provide suitable suggestions for locality for other users who connect from the same network. By that, the knowledge of the roaming database is successively improved about (probable) localities for different IP subnetworks. In other respects this means no difference compared with the scenario above.

### The case user - semi-stationary terminal

The scenario is that a user wants to get access to his/her portal from a semi-stationary terminal 101, for instance a portable computer which for the time being is connected by Ethernet on a place of work. The scenario reminds a lot of the case user - stationary terminal which has been described above. In this case the user gets access to a temporary IP-number from an IP-number pool in the company network where he/she is. The allocation of IP-numbers is made either manually or via any automatic protocol, for instance DHCP, Dynamic Host Configuration Protocol. The mapping towards which server that shall be appointed to be local server 104 then is made in the same way as above with regard to the database in the roaming server 105, on basis of the IP-number of the company network.
Authentication, deriving of home locality profile and personal portal profile, updating with information from the local server 104, etc is after that made as in the case user - stationary terminal described above.

### The case user - called circuit connection

The scenario is that a user wants to get access to his/her portal with a called circuit connection to the network. In the network the calling modems are connected to a so called OLL-box which handles login and debiting. The OLL-box even today controls calling subscriber numbers (A-numbers). To make the roaming function functioning, the OLL-box is updated so that it also listens to HTTP-calls. One solution to make the OLL-box listen to and filter HTTP-traffic is so called transparent proxy.
If a call coming in to www.myportal.se (which is going to the roaming server 105), the "OLL-box" adds the subscriber number in the call. For instance http://www-myportal.se can with addition be http://www-myportal.se?subscribernumber =####-#####, where the #-symbols represent the digits in a telephone number. The roaming server 105 then maps the subscriber number towards geographical location and determines local server 104.
Authentication, deriving of home locality profile and personal portal profile, updating with information from the local server 104 etc, is after that made in the same way as in the case user - stationary terminal which has been discussed above.

### The case user - mobile terminal

The scenario is that a user wants to get access to his/her portal from a mobile terminal, for instance GSM or, in the future, for instance UMTS. In this case the position of the mobile is known by the roaming server 105 by the data which exist about base station location. At handover in the mobile system (not shown in the figures) the roaming server 105 is updated with the new position for base station in question.
The OLL-box checks, as has been mentioned, already today calling subscriber numbers. In the same way as in the previous case, the OLL-box shall add the subscriber number in the HTTP-calls to www.myportal.se which it has been updated to listen to.
If the OLL-box can be updated so that it also gets information about base station ID of the base station to which the mobile is connected, also this identity is added in the HTTP-call. If the OLL-box cannot get base station ID, the roaming server 105 uses the subscriber number to make an enquiry to the traffic management database of the GSM/UMTS-system and by that get knowledge of the geographical position of the mobile.
If more exact location is wanted than only with which base station the mobile has contact, this can be achieved by, for instance, GSM-positioning or via GPS. Authentication, deriving of home locality profile and personal portal profile, updating with information from the local server 104, etc, is after that made in the same way as in the case user - stationary terminal described above.

### Description of the services

Below are described examples of what the different services in the portal may contain. A lot of the examples of new services which are presented are based on that the portal also is possible to use at a mobile terminal. At present, WAP-terminals, alternatively PDAs, are probable candidates for this application. New technology, UMTS in the first place, combined with new terminals will make possible the ideas which are described below in a not too far distant future.

"PLING" means that a sound is heard and/or a twinkling lamp is lighted in the middle of the portal which informs about that something has happened, for instance that the user has got a mail, somebody is searching for him/her, or a notification of an event the user has asked to be watched.

There also should be possibility for the user to in a simple way himself/herself adapt his/her portal, for instance to add new services and to select a personal style in form of colors or background patterns.

### MyHome

Under the service MyHome there may be functions for control and supervision, for instance video supervision of the home. It should be possible to switch on the sauna when traveling home, increase the heating of the home, switch on and switch off lamps, surveil one's home by video cameras and sensors which detect changes etc. Different types of alarm functions should be included for both internal and external damage, i.e. burglary and water leaks.

### MyCity

The service MyCity contains information and offers from the municipality and the local trade and industry. In addition different types of services can be offered which can be used in a simple way in the geographical neighborhood where the user is just at the time being.

### MyLeisureTime

The pie chart piece "MyLeisureTime" can contain for instance music, video and multi-user games within a city/district which can be regarded as a hybrid between the real and the virtual world. The user shall have possibility to get game information (for instance clues, information) to a mobile terminal depending on where in the physical reality he/she is, i.e. a virtual information layer is laid on top of the physical reality of the game.

The local operator's broadband network makes it possible to get very high quality of the material that is transferred, when it is distributed within the geographical vicinity, for instance a city.

### MyWork

Under the service MyWork there are services which makes it easy for the user always to get access to documents, e-mail, fax, messages, calendar and have possibility to get notifications/reminders. The user shall in this way be able to in an easy way work from home. The user shall have possibility to, in a simple way, see which of his/her workmates that are online (ICQ-similar), have possibility to, in a simple way, set up video conferences with those at home, and share virtual work surfaces.

### MyCar

Under the service MyCar there are among other things different types of control functions. One example is that the user shall able to remotely start engine heater or timer for engine heater.

### MyFriends/MyFamily

Under the service MyFriends/MyFamily is located all addresses, telephone numbers, fax numbers, E-mail addresses etc that the user needs. Functions such as group-pling, i.e. a question is transmitted to a plurality of persons shall exist, and the possibility to rapidly set up video conferences.

### MyNews

Under the pie chart piece "MyNews" the user shall have access to TV, radio, the newspaper and other news that shall be watched. The user shall have possibility to study the news whenever he/she wants. He/she also shall have access to an archive with news that can be searched from, for instance, local TV and radio, i.e. the user shall be able to search among both video, radio and text material. It shall be possible for the user to get access to this both when he/she is out traveling, and when he/she is at home.

### MyOtherServices

MyOtherServices includes all other types of services the user can get access to via his/her portal. MyMoney gives the user on the one hand possibility to mobile shopping, on the other to pay for different types of services he/she utilizes as, for instance, VoD and music. The local bank office can in a simple way be accessed from the portal. MyPersonalStoringPlace where the user shall have possibility to store his/her photographs, videos etc, and in a simple way have possibility to access and show, independent of place and terminal. Under MyOtherServices a user also can select to get tailored offers, MyOffers, from businessmen and advertisers.

## Claims

1. Procedure for control of provision of services in a data communication network (100) where a user (101) changes from utilizing a first data communication network connection on a first geografical locality to utilizing a second data communication network connection on a second geografical locality, wherein a first set of services accessible to the user and associated with the first data communication network connection is replaced by a second set of services accessible to the user and associated with the second data communication network connection, where the replacement of the set of services includes to change a portal profile (102) associated with the user, said portal profile including one local geografical profile associated with at least one of the first and the second geografical locality, **characterized in that** the portal profile includes one for the user personal portal profile, and **in that** the replacement is made depending on the capacity of the connection point to the network (100).

2. Procedure as claimed in claim 1, wherein the replacement of the set of services includes a change of a portal profile associated connection with the user (101).

3. Procedure as claimed in claim 1 or 2, wherein the replacement is depending on which type of equipment which the user (101) connects to the network (100).

4. Procedure as claimed in claim 1 or claim 2, wherein the replacement is made depending on the geographical location of the connection points.

5. Procedure as claimed in claim 4, wherein the geographical location is determined by means of a network address.

6. Procedure as claimed in claim 4, wherein the geographical location is determined by means of a telephone number.

7. Procedure as claimed in claim 4, wherein the geographical location is determined by means of a base station identity in a mobile telephone system connected to the network (100).

8. Procedure as claimed in claim 1, wherein the capacity is determined by means of measuring.

9. Procedure as claimed in claim 1, wherein the capacity is determined by means of available information about the connection point.

10. System for control of provision of services in a data communication network (100) where a user (101) changes from utilizing a first data communication network connection on a first geographical locality to utilizing a second data communication network connection on a second geographical locality, including devices (105) for replacing a first set of services (202-209) accessible to the user and associated with the first data communication network connection with a second set of services (305-309) accessible to the user and associated with the second data communication network connection, where the devices for the replacement of the set of services includes devices (103, 104) to change a portal profile associated with the user, said portal profile including one local geografical profile associated with at least one of the first and the second geografical locality, **characterized in that** the portal profile (102) includes one for the user personal portal profile, and **in that** said devices (105) for replacing a first set of services (202-209) by a second set of services (305-309) are adapted to perform the replacement depending on the capacity of the connection point to the network (100).

11. System as claimed in claim 10, wherein the devices (105) for replacement includes devices to determine which type of equipment the user connects to the network (100).

12. System as claimed in claim 10, wherein the devices (105) for replacement includes devices to determine the geographical location of the connection points.

13. System as claimed in claim 12, wherein the devices to determine the geographical location include devices to determine a network address.

14. System as claimed in claim 12, wherein the devices to determine the geographical location include devices to determine a telephone number.

15. System as claimed in patent claim 12, wherein the devices to determine the geographical location include devices to determine a base station identity in a mobile telephone system connected to the network (100).

## Patentansprüche

1. Verfahren zum Steuern der Bereitstellung von Diensten in einem Datenkommunikationsnetz (100), wo ein Benutzer (101) von der Benutzung einer ersten Datenkorrurrunikationsnetzverbindung an einem ersten geografischen Ort zur Benutzung einer zweiten Datenkommunikationsnetzverbindung an einem zweiten geografischen Ort wechselt, wobei ein erster Satz von Diensten, die für den Benutzer zugänglich sind und mit der ersten Datenkommunikationsnetzverbindung verknüpft sind, durch einen zweiten Satz von Diensten, die dem Benutzer zugänglich sind und mit der zweiten Datenkommunikationsnetzverbindung verknüpft sind, ersetzt wird, wobei das Ersetzen des Satzes von Diensten es einschließt, ein Portalprofil (102), das mit dem Benutzer verknüpft ist, zu wechseln oder zu ändern, welches Portalprofil ein lokales geografisches Profil einschließt, das mit wenigstens einem von ersten und zweiten geografischen Orten verknüpft ist, **dadurch gekennzeichnet, dass** das Portalprofil ein für den Benutzer persönliches Portalprofil einschließt und dass die Ersetzung in Abhängigkeit von der Kapazität des Verbindungspunkts zum Netz (100) vorgenommen wird.

2. Verfahren nach Anspruch 1, bei dem das Ersetzen des Satzes von Diensten einen Wechsel der mit dem Portalprofil verknüpften Verbindung mit dem Benutzer (101) einschließt.

3. Verfahren nach Anspruch 1 oder 2, bei dem das Ersetzen davon abhängt, welchen Typ von Ausrüstung der Benutzer (101) mit dem Netz (100) verbindet.

4. Verfahren nach Anspruch 1 oder Anspruch 2, bei dem das Ersetzen in Abhängigkeit vom geografischen Ort der Verbindungspunkte vorgenommen wird,

5. Verfahren nach Anspruch 4, bei dem der geografische Ort mittels einer Netzadresse bestimmt wird.

6. Verfahren nach Anspruch 4, bei dem der geografische Ort mittels einer Telefonnummer bestimmt wird.

7. Verfahren nach Anspruch 4, bei dem der geografische Ort mittels einer in einem mobilen Telefonsystem bestimmt wird, dass mit dem Netz (100) verbunden wird.

8. Verfahren nach Anspruch 1, bei dem die Kapazität durch Messung bestimmt wird.

9. Verfahren nach Anspruch 1, bei dem die Kapazität mittels von zur Verfügung stehender Information über den Verbindungspunkt bestimmt wird.

10. System für die Steuerung der Bereitstellung von Diensten in einem Datenkommunikationsnetz (100), wo ein Benutzer (101) von der Benutzung einer ersten Datenkommunikationsnetzverbindung an einem ersten geografischen Ort zur Benutzung einer zweiten Datenkommunikationsnetzverbindung an einem zweiten geografischen Ort wechselt, das Einrichtungen (105) zum Ersetzen eines ersten Satzes von Diensten (202-209), die für den Benutzer zugänglich sind und mit der ersten Datenkommunikationsnetzverbindung verknüpft sind, durch einen zweiten Satz von Diensten (305-309), die für den Benutzer zugänglich sind und mit der zweiten Datenkommunikationsnetzverbindung verknüpft sind einschließt, wobei die Einrichtungen für das Ersetzen des Satzes von Diensten Einrichtungen. (103, 104) einschließen, um ein Portalprofil zu ändern oder zu wechseln, das mit dem Benutzer verknüpft ist, welches Portalprofil ein lokales geografisches Profil einschließt, das mit wenigstens einem der ersten und zweiten geografischen Orte verknüpft ist, **dadurch gekennzeichnet, dass** das Portalprofil (102) ein für den Benutzer persönliches Portalprofil einschließt und dass die Einrichtungen (105) zum Ersetzen eines ersten Satzes von Diensten (202-209) durch einen zweiten Satz von Diensten (305-309) dazu ausgebildet sind, die Ersetzung in Abhängigkeit von der Kapazität des Verbindungspunktes zum Netz (100) durchzuführen.

11. System nach Anspruch 10, bei dem die Einrichtungen (105) für die Ersetzung Einrichtungen einschließen, zu bestimmen, welchen Typ von Ausrüstung der Benutzer mit dem Netz (100) verbindet.

12. System nach Anspruch 10, bei dem die Einrichtungen (105) zum Ersetzen Einrichtungen einschließen, um den geografischen Ort der Verbindungspunkte zu bestimmen.

13. System nach Anspruch 12, bei dem die Einrichtungen zum Bestimmen des geografischen Ortes Einrichtungen zum Bestimmen einer Netzadresse einschließen.

14. System nach Anspruch 12, bei dem die Einrichtungen zum Bestimmen des geografischen Ortes Einrichtungen zum Bestimmen einer Telefonnummer einschließen.

15. System nach Anspruch 12, bei dem die Einrichtungen zum Bestimmen des geografischen Ortes Einrichtungen einschließen, eine Basisstationsidentität in einem mobilen Telefonsystem zu bestimmen, das mit dem Netz (100) verbunden ist.

## Revendications

1. Procédure pour le contrôle de la fourniture de services dans un réseau de communication de données (100) où un utilisateur (101) passe de l'utilisation d'une première connexion de réseau de communication de données sur une première localité géographique à l'utilisation d'une seconde connexion de réseau de communication de données sur une seconde localité géographique, dans laquelle un premier ensemble de services accessible à l'utilisateur et associé à la première connexion de réseau de communication de données est remplacé par un second ensemble de services accessible à l'utilisateur et associé à la seconde connexion de réseau de communication de données, où le remplacement de 1/ensemble de services inclut le changement d'un profil de portail (102) associé à l'utilisateur, ledit profil de portail incluant un profil géographique local associé à au moins une de la première et de la seconde localité géographique, **caractérisée en ce que** le profil de portail inclut un profil de portail personnel pour l'utilisateur, et **en ce que** le remplacement est effectué en fonction de la capacité du point de connexion au réseau (100).

2. Procédure selon la revendication 1, dans laquelle le remplacement de l'ensemble de services inclut un changement d'une connexion de profil de portail associé à l'utilisateur (101).

3. Procédure selon la revendication 1 ou 2 dans laquelle le remplacement dépend du type d'équipement que l'utilisateur (101) connecte au réseau (100).

4. Procédure selon la revendication 1 ou 2, dans laquelle le remplacement est effectué en fonction de la localisation géographique des points de connexion.

5. Procédure selon la revendication 4, dans laquelle la localisation géographique est déterminée au moyen d'une adresse réseau.

6. Procédure selon la revendication 4, dans laquelle la localisation géographique est déterminée au moyen d'un numéro de téléphone.

7. Procédure selon la revendication 4, dans laquelle la localisation géographique est déterminée au moyen d'une identité de station de base dans un système de téléphonie mobile connecté au réseau (100).

8. Procédure selon la revendication 1, dans laquelle la capacité est déterminée au moyen d'une mesure.

9. Procédure selon la revendication 1, dans laquelle la capacité est déterminée au moyen d'informations disponibles concernant le point de connexion.

10. Système pour le contrôle de la fourniture de services dans un réseau de communication de données (100) où un utilisateur (101) passe de l'utilisation d'une première connexion de réseau de communication de données sur une première localité géographique à l'utilisation d'une seconde connexion de réseau de communication de données sur une seconde localité géographique, incluant des dispositifs (105) pour remplacer un premier ensemble de services (202-209) accessible à l'utilisateur et associé à la première connexion de réseau de communication de données par un second ensemble de services (305-309) accessible à l'utilisateur et associé à la seconde connexion de réseau de communication de données, où les dispositifs pour le remplacement de l'ensemble de services incluent des dispositifs (103, 104) pour changer un profil de portail associé à l'utilisateur, ledit profil de portail incluant un profil géographique local associé à au moins une de la première et de la seconde localité géographique, **caractérisé en ce que** le profil de portail (102) inclut un profil 1 de portail personnel pour l'utilisateur, et **en ce que** lesdits dispositifs (105) pour remplacer un premier ensemble de services (202-209) par un second ensemble de services (305-309) sont adaptés pour effectuer le remplacement en fonction de la capacité du point de connexion au réseau (100).

11. Système selon la revendication 10, dans lequel les dispositifs (105) pour le remplacement incluent des dispositifs pour déterminer quel type d'équipement l'utilisateur connecte au réseau (100),

12. Système selon la revendication 10, dans lequel les dispositifs (105) pour le remplacement incluent des dispositifs pour déterminer la localisation géographique des points de connexion,

13. Système selon la revendication 12, dans lequel les dispositifs pour déterminer la localisation géographique incluent des dispositifs pour déterminer une adresse réseau,

14. Système selon la revendication 12, dans lequel les dispositifs pour déterminer la localisation géographique incluent des dispositifs pour déterminer un numéro de téléphone.

15. Système selon la revendication 12, dans lequel les dispositifs pour déterminer la localisation géographique incluent des dispositifs pour déterminer une identité de station de base dans un système de téléphonie mobile connecté au réseau (100).
